# EUROPÄISCHE PATENTSCHRIFT

(11) **EP 1 176 388 B1**
(45) Veröffentlichungstag und Bekanntmachung des Hinweises auf die Patenterteilung: **10.12.2008**
(21) Anmeldenummer: 01116438.1
(22) Anmeldetag: 06.07.2001
(51) Int. Cl.: G01B 11/06, G01B 11/30

(54) **Verfahren und Kontrollsystem zur Kontrolle der Beschichtungsqualität von Werkstücken**
Procedure and control system to control the quality of layers on objects
Procédé et système de contrôle pour contrôler la qualité des couches sur un objet

(30) Priorität: 27.07.2000 DE 10036741
(43) Veröffentlichungstag der Anmeldung: 30.01.2002
(73) Patentinhaber: Dürr Systems GmbH, 70435 Stuttgart (DE)
(72) Erfinder: Maxharraj, Bekim, 74321 Bietigheim-Bissingen (DE); Zabel, Michael, 71364 Winnenden (DE); Jost, Jürgen, 71726 Benningen (DE)
(74) Vertreter: Heusler, Wolfgang

(56) Entgegenhaltungen:
- WO-A-98/14778
- DE-A- 19 717 593
- US-A- 4 702 931
- US-A- 5 293 218

## Beschreibung

Die Erfindung betrifft ein Verfahren und ein Kontrollsystem zur Kontrolle der Beschichtungsqualität, insbesondere von Fahrzeugkarossen .

Für die Qualitätsprüfung beschichteter Oberflächen werden "Online"-Messsysteme verwendet, die schon während des Produktionsprozesses Beschichtungsfehler erkennen und deren Korrektur ermöglichen sollen. Typische Lackfehler wie z.B. Poren, Bläschen usw. oder flächige Fehler wie Orangenhaut oder Wolkenbildung bei Metallic-Lackierungen lassen sich durch Reflexionsmessung mit ortsfest an einem Messportal angeordneten oder von programmgesteuerten Robotern geführten Kameras fest-stellen (JOT 1997/3, S. 72-73). Die auf Lichtreflexion beruhende Lackfehlermessung liefert aber keine qualitativ genauen Messwerte bestimmter Beschichtungsparameter wie z.B. der Schichtdicke oder des Farbtons. Außerdem ist es schwierig, einer mit einer Kamera abgetasteten Fehlerstelle die genauen Koordinaten in einem Bezugssystem zuzuordnen, so daß es nicht einfach ist, die ermittelten Fehler durch Änderung des Beschichtungsprogramms zu korrigieren.

Aus der DE 197 17 593 A1 ist es auch bereits bekannt, zur "Online"-Kontrolle serienweise beschichteter Fahrzeugkarossen deren Oberflächen mit einem an einem Roboter angebrachten Messkopf abzutasten, der mehrere unterschiedliche Messgeräte für Qualitätsparameter wie Welligkeitsverlauf, Farbton, Farbglanz und Schichtdicke enthält. Der Roboter soll eine Vielzahl von im Programm hinterlegten Messpunkten der Karosse anfahren, deren jeweilige Messdaten in einem Rechner gespeichert und dazu verwendet werden können, für jeden Messpunkt das Messergebnis in der Darstellung der Karosse auf einem Bildschirm z.B. durch Markierungen mit unterschiedlichen Farben anzuzeigen. Bei dem aus der DE 197 17 593 bekannten "Online"-Kontrollverfahren fehlte aber eine eindeutige Zuordnung zwischen den Messpunkten und den Messwerten. Es war deshalb schwierig, die Messwerte auf dem Bildschirm genau an den Messpunkten darzustellen und zu markieren. Auch die gewünschte Fehlerkorrektur im geschlossenen Regelkreis war schwierig.

WO 98 14 778 A offenbart ein Verfahren zur Vermessung von lackierten Prüftafeln, bei denen es sich z.B. um gekrümmte Teile von Fahrzeugkarossen handeln kann, und die z.B. von einem Labor-Roboter aus einem Aufgabemagazin entnommen, auf eine Messstation gelegt und schließlich in eine Ablagestation überführt werden. In der Messstation wird durch den Labor-Roboter mit verschiedenen Messgeräten eine Vermessung der verschiedenen Eigenschaften der Beschichtung durchgeführt, was ortsaufgelöst und elektronisch erfasst erfolgen soll. Die Prüftafeln enthalten einen aufgeklebten Barcode, aus dem mit einem Lesegerät die Positionen der Messpunkte ermittelt werden.

US-A-5 293 218 offenbart ein Verfahren zur Prüfung von Düsentreibstoff, der zu diesem Zweck über ein geheiztes Metallrohr geleitet wird, worauf der Verlauf der Dicke des sich bildenden Niederschlags mit einem automatisch über die Oberfläche bewegten Messgerät an vorbestimmten Messpunkten gemessen wird. Ein Rechner berechnet komplette Schichtdickenprofile auf der Zylindermantelfläche des Metallrohrs.

US-A-4 702 931 offenbart ein Verfahren zur Kontrolle der Beschichtungsqualität von automatisch lackierten Platten, bei dem die Dicke der noch nassen Lackschicht mit berührungslos über die Plattenoberfläche bewegten Messgeräten gemessen wird.

Dabei werden unter Steuerung eines Rechners unterschiedliche Messpunkte in einer definierten Spur angefahren.

Der Erfindung liegt die Aufgabe zugrunde, ein Verfahren und ein Kontrollsystem anzugeben, die qualitativ genaue Messung und eine genau reproduzierbare Zuordnung der Messwerte zu den Messorten ermöglichen.

Diese Aufgabe wird durch die in den Patentansprüchen angegebenen Merkmale gelöst.

An sich ist es bereits bekannt, in programmgesteuerten Beschichtungsanlagen für Fahrzeugkarossen Daten zu speichern, welche die Lage bestimmter Karossenpunkte in einem Referenzkoordinatensystem definieren (DE 198 04 400). Durch die Verknüpfung der Messdaten mit den Messpunktkoordinaten in der Datenbank wird aber nicht nur die Markierung von Beschichtungsfehlern beispielsweise auf einem Bildschirm, sondern auch die entsprechende Korrektur der für die Fehler verantwortlichen Beschichtungsparameter des für die Beschichtungsanlage vorgesehenen Beschichtungsprogramms wesentlich erleichtert und vereinfacht. Zur Korrektur von Beschichtungsfehlern an den Messpunkten können nämlich die gespeicherten Beschichtungsparameter aufgrund der ermittelten Koordinaten punktgenau und genau im qualitativ erforderlichen Maße geändert werden. Das Ergebnis ist eine generelle Verbesserung der Beschichtungsqualität.

Da der jeweils gemessene Punkt auf der Werkstückoberfläche aufgrund seiner Koordinaten eindeutig bestimmbar ist, können die gemessenen Qualitätsparameter ebenso eindeutig dem Beschichtungsprogramm zugeordnet werden. Dies wird dadurch ermöglicht, dass es sich bei den Koordinaten der Qualitätsparameter und bei denjenigen der im Beschichtungsprogramm enthaltenen Werkstückpunkte jeweils um Objektkoordinaten handelt, die denselben Bezugspunkt haben.

Wenn also eine Abweichung eines Qualitätsparameters von seinem Sollwert gemeldet wird, kann dieser Fehler dem Verursacher, also dem Sprüh- oder sonstigen Beschichtungsorgan für die betreffende Beschichtungsstelle des Werkstücks (z. B. einer lackierten Karosse) eindeutig zugeordnet werden. Diese Zuordnung wird dadurch gewährleistet, dass jedes Werkstück bei der Serienbeschichtung und bei der anschließenden Messung durch eine eigene Codenummer identifiziert ist. Zu jedem Werkstück können zum Zeitpunkt der Beschichtung in einer Datenbank alle etwaigen Fehler gespeichert werden (Sprühorgan ausgefallen, keine Farbe, Druckregler defekt, etc.) Ferner können alle an der Beschichtungsanlage vorgenommenen prozess-, verfahrens- und applikationstechnischen Änderungen in Form eines "Änderungsjournals" gespeichert werden. Zusätzlich zu den in der Prozessdatenbank bereits vorhandenen Sollwerten aller für die Beschichtung relevanten Parameter der Verfahrens-, Applikations- und Prozesstechnik können auch deren jeweilige Istwerte aufgenommen und gespeichert werden. Damit kann eine vollständige Korrelation zwischen der Messung der Qualitätsparameter und den Ereignissen im Beschichtungsprozess gewährleistet werden.

Darüber hinaus ergeben sich für die Erfindung zusätzliche Kontrollmöglichkeiten wie z. B. einfacher Vergleich aktueller Messergebnisse mit den Ergebnissen früherer Messungen an anderen, zuvor beschichteten Werkstücken, die Ermittlung und Darstellung von Entwicklungstrends bestimmter Fehler, der kontinuierliche Fehlerverlauf auf dem Werkstück usw. oder auch die lupenartige Untersuchung besonderer, schwierig zu beschichtender Problemzonen.

Anhand der Zeichnung wird die Erfindung näher erläutert. Es zeigen:
- Fig. 1: eine schematische Darstellung einer beschichteten Fahrzeugkarosse;
- Fig. 2: die dreidimensionale Darstellung der Karosse auf einem Bildschirm;
- Fig. 3: eine Fig. 1 entsprechende zu beschichtende Karosse; und
- Fig. 4: einen geschlossenen Prozessregelkreis für die Karossenbeschichtung.

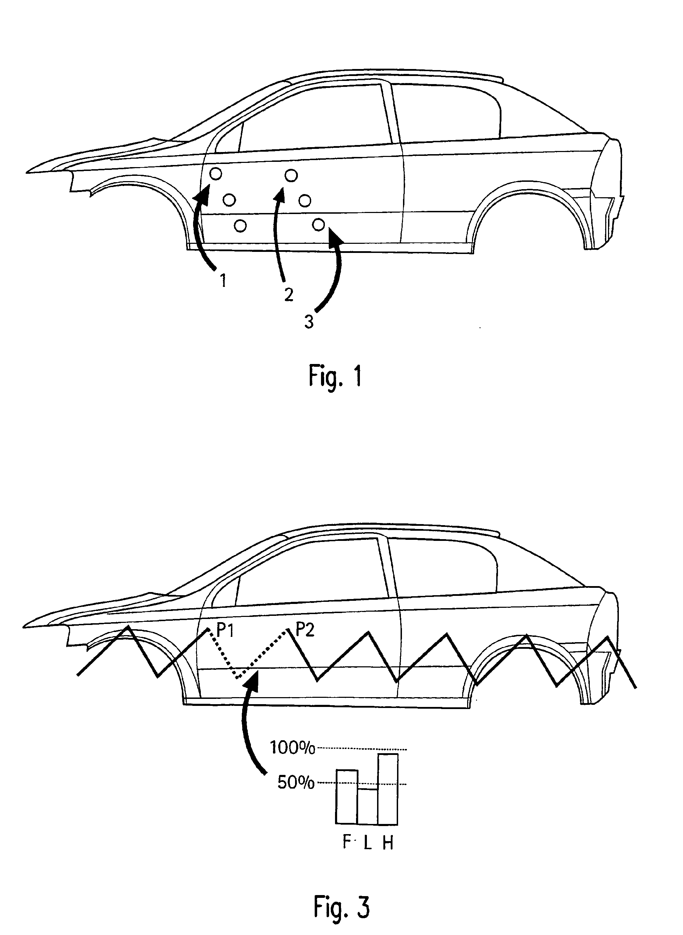

Es sei angenommen, daß die in Fig. 1 dargestellte Karosse im normalen Serienbeschichtungsbetrieb lackiert wurde und nun hinsichtlich der Beschichtungsqualität geprüft werden soll. Zu diesem Zweck wird von einem programmgesteuerten Roboter (oder sonstigen mehrachsigen Bewegungsautomaten) ein Messgerät über die beschichtete Oberfläche bewegt, mit dem an beliebig gewählten Punkten 1, 2, 3 ein für die Beschichtungsqualität relevanter Parameter gemessen wird. Bei dem betrachteten Beispiel ist insbesondere die Schichtdicke wichtig, mit der auch verschiedene sonstige Eigenschaften der Lackschicht zusammenhängen. Geeignete Geräte zur vorzugsweise berührungslosen Messung der Schichtdicke sind an sich bekannt, z.B. mit Lasern arbeitende Messköpfe zur Messung des Naßlacks. Die Qualitätsmessung kann generell sowohl als Naßmessung als auch als Trockenmessung erfolgen, vorzugsweise im Online-Betrieb unmittelbar an der Lackierstraße hinter den Beschichtungsmaschinen.

Anstelle oder zusätzlich zu der Schichtdicke können auch andere für die Qualität relevante Parameter wie Farbton und/oder Oberflächenverlauf beispielsweise in der aus der DE 197 17 593 A1 an sich bekannten Weise gemessen werden.

Während der Messungen können die Ortskoordinaten X, Y, Z der von dem Roboter angefahrenen Messpunkte in einem dreidimensionalen kartesischen Bezugskoordinatensystem aufgrund der bezüglich der Karosse definierten Roboterbewegungen selbsttätig ermittelt werden. Zugleich werden für jede Messung die Messwinkel A, B, C als "Koordinaten" der Schwenkbewegung oder Drehstellung des Messgerätes um die X-, Y- und Z-Achsen des Koordinatensystems festgestellt, um auch in dieser Hinsicht definierte Messergebnisse zu erhalten. Dadurch können u.a. Abweichungen der Messung von der in der Regel gewünschten 90°-Stellung festgestellt und korrigiert oder bei der Auswertung berücksichtigt werden.

Es ergibt sich also eine eindeutige Zuordnung und Verknüpfung zwischen den Messwerten wie Schichtdicke, Farbton oder Verlauf und den Koordinaten X, Y, Z, A, B, C der jeweils nach Bedarf oder beispielsweise nach einem vorgegebenen Steuerprogramm gewählten Messpunkte gemäß Fig. 1. Die gemessenen Werte werden der Systemsteuerung übermittelt, die ihnen die zugehörigen Koordinaten hinzufügt und diese Daten gemeinsam in einer Datenbank speichert. Die Zuordnung ist zweckmäßig mit Hilfe des Steuerprogramms des Messroboters realisierbar, dessen Positionen bezüglich der Karosse in der an sich üblichen Weise in Form von Koordinaten gespeichert werden. Ein entsprechendes Koordinatensystem kann dem Bewegungsprogramm der Beschichtungsmaschinen zugrundegelegt werden, bei denen es sich um konventionelle Seiten- und Dachmaschinen oder auch um Roboter handeln kann.

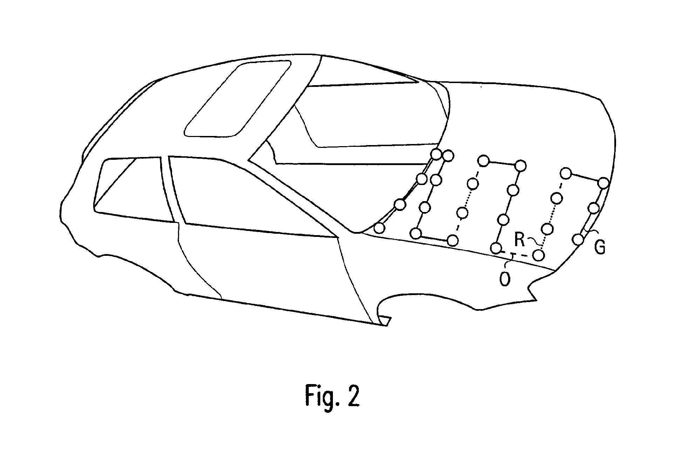

Mit den gespeicherten Mess- und Koordinatendaten ist es zunächst möglich, beispielsweise in einem dreidimensionalen Bild der Karosse gemäß Fig. 2 auf einem Rechnerbildschirm die gewählten Messpunkte sichtbar darzustellen. Es kann zweckmäßig sein, in dieser Darstellung ständig oder auf Anforderung neben einzelnen oder allen Messpunkten jeweils deren Koordinaten und/oder die Schichtdicken- oder sonstigen Messwerte anzuzeigen. Besonders vorteilhaft für die Beurteilung der Beschichtungsqualität kann es ferner sein, in dem Karossenbild die einzelnen gemessenen Schichtdickenwerte zwischen aufeinanderfolgenden Messpunkten zu Linien oder Flächen zu interpolieren und diese je nach Übereinstimmung oder Abweichung von Sollwerten farblich unterschiedlich darzustellen, um bei Schwankungen der Schichtdicke oder sonstigen gemessenen Parameter den jeweiligen örtlichen Trend anzuzeigen. Je nach der gemessenen Schichtdicke ändert sich also die Farbe der zwischen den einzelnen Messpunkten auf dem Bildschirm dargestellten Linien. Beispielsweise können die in Fig. 2 durchgehenden Linien G grün für "in Ordnung" dargestellt werden, die gestrichelten Linien O orange für "Grenzbereich" und die gepunkteten Linien R rot für "falsch", so daß der Trend von einwandfreien Stellen bis hin zu fehlerhaften Stellen gut zu erkennen ist.

Eine weitere Möglichkeit besteht darin, daß auf dem Bildschirm vorzugsweise gleichzeitig mit den bei der jeweiligen Messung gespeicherten aktuellen Messergebnissen auch frühere Messergebnisse dargestellt werden, die zuvor bei der Vermessung einer anderen, früher beschichteten Karosse gespeichert worden waren. Dadurch können auch zeitliche Trends und Beschichtungsänderungen im laufenden Beschichtungsbetrieb erkannt werden, wie sie beispielsweise durch Maschinenfehler, Justierungsänderungen, Änderungen der Umgebungsbedingungen wie Temperatur oder Feuchtigkeit, neues Lackmaterial usw. verursacht werden können.

Ferner kann zur Kontrolle schwierig zu beschichtender Problemzonen der Karossenoberfläche ein besonderes Messprogramm vorgesehen sein, nach dem nur die Problemzone mit dem Messgerät abgetastet wird. Die mit Unterstützung durch eine Prozessdatenbank gezielt und problemspezifisch automatisch angefahrene Problemzone kann wie mit einer Lupe eingekreist und mit einem speziellen Messprogramm mit den erforderlichen Messtools und Messparametern analysiert werden.

Auch der eigentliche Zweck der hier beschriebenen Qualitätskontrolle, nämlich die Korrektur festgestellter Beschichtungsfehler etwa bei der Beschichtung nachfolgender Karossen, ist aufgrund der eindeutigen und genauen Korrelation zwischen den Messwerten und den Koordinaten der jeweiligen Messpunkte und folglich auch den Prozessparametern (Farbmenge, Lenkluft, Hochspannung usw.) des Beschichtungsprogramms, die in üblicher Weise ebenfalls punktweise gespeichert werden können, einfach realisierbar. Entsprechendes gilt für die Korrektur von Fehlern an dem vermessenen Werkstück selbst.

Fig. 3 zeigt eine typische Beschichtungsbahn, wie sie beim Lackieren einer Karosse erzeugt wird, während diese an einem auf und ab bewegten Zerstäuber vorbeigefahren wird. Da die Prozessparameter, die beispielsweise bei der Beschichtung an den Messpunkten 1 und 2 gemäß Fig. 1 eingestellt waren, aufgrund ihrer mit den Messwerten gespeicherten Koordinaten eindeutig auffindbar sind, können sie an den Stellen der entsprechenden Punkte P1 und P2 der Beschichtungsbahn bei der Beschichtung nachfolgender Karossen erforderlichenfalls problemlos und unter Berücksichtigung der qualitativ gespeicherten Messergebnisse korrigiert werden. Die Stellgrößen für den Beschichtungsprozess können hierbei mit Hilfe einer Korrelationsanalyse in der erforderlichen Weise geändert werden. Gemäß der Darstellung in Fig. 3 werden in der betrachteten Strecke Die Parameterkorrektur erfolgt durch das Bedienungspersonal der Beschichtungsanlage oder auch selbsttätig im geschlossenen Prozessregelkreis. Bei der automatischen Korrektur können die Messwerte mit für jeden Messpunkt gespeicherten Sollwerten z.B. der Schichtdicke verglichen und etwaigen Abweichungen entsprechende Daten oder Signale für die Korrektur des gespeicherten Beschichtungsprogramms erzeugt werden.

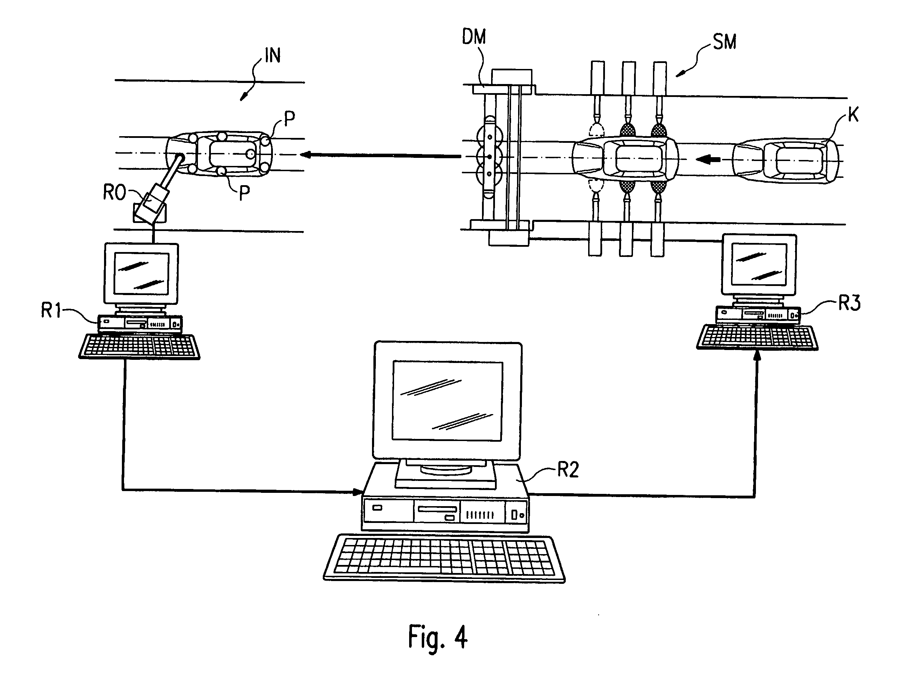

Ein geschlossener Prozessregelkreis ist in Fig. 4 dargestellt. Demgemäß werden die Karossen K in der üblichen Weise beispielsweise von Seitenmaschinen SM und einer Dachmaschine DM (oder stattdessen von Robotern) lackiert und anschließend in einen Inspektionsbereich IN gefördert, wo von einem Roboter R0 mit einem Messkopf in der beschriebenen Weise an ausgewählten Stellen oder Messpunkten P beispielsweise die Schichtdicke gemessen wird. Die Messergebnisse werden von einem den Roboter RO steuernden Messrechner R1 selbsttätig verarbeitet und ausgewertet und anschließend an einen Prozessrechner R2 übergeben. Der Prozessrechner R2 verfügt über die Datenbank zur Speicherung der Messergebnisse gemeinsam mit den Koordinaten der Messpunkte. Der Prozessrechner kann auch die erwähnte Interpolation durchführen und die farblich markierten Ergebnisse gemäß Fig. 2 auf seinem Bildschirm anzeigen.

Aufgrund ermittelter Qualitätsfehler veranlaßt der Prozessrechner R2 dann einen Steuerrechner R3, die nachfolgenden Karossen K mit den in der erforderlichen Weise korrigierten Prozessparametern zu beschichten.

## Patentansprüche

1. Verfahren zur Kontrolle der Beschichtungsqualität von serienweise automatisch mit einem Applikationsorgan gemäß Prozessparametern eines gespeicherten Beschichtungsprogramms beschichteten Werkstücken, insbesondere Fahrzeugkarossen, wobei
mindestens ein Messgerät zur Messung mindestens eines Qualitätsparameters der Schicht selbsttätig von einem Roboter oder Bewegungsautomaten über die beschichtete Oberfläche des im Serienbeschichtungsbetrieb beschichteten Werkstücks bewegt wird und an vorbestimmten Meßpunkten den Parameter misst, und wobei die Meßwerte in einer Datenbank gespeichert werden;
die Koordinaten der Messpunkte in einem die beschichtete Oberfläche definierenden und auf die Bewegung des Meßgerätes bezogenen Koordinatensystem selbsttätig ermittelt werden;
die Koordinaten der Meßpunkte in der Datenbank zusammen mit den an den jeweiligen Punkten gemessenen Werten gespeichert und ihnen zugeordnet werden; **dadurch gekennzeichnet, daß** mit den Koordinaten der Meßpunkte die jeweilige Schwenkstellung (A, B, C) des Meßgerätes um die Achsen (X, Y, Z) des Koordinatensystems in der Datenbank gespeichert wird.

2. Verfahren nach Anspruch 1, **dadurch gekennzeichnet, daß** die Schichtdicke gemessen wird.

3. Verfahren nach einem der vorangehenden Ansprüche, **dadurch gekennzeichnet, daß** die Meßwerte mit für jeden Meßpunkt gespeicherten Sollwerten verglichen und Abweichungen entsprechende Daten oder Signale erzeugt werden.

4. Verfahren nach einem der vorangehenden Ansprüche, **dadurch gekennzeichnet, daß** mindestens ein Teil des beschichteten Werkstücks auf einem Bildschirm dargestellt wird und in dem Werkstückbild Änderungen des gemessenen Parameters zwischen aufeinanderfolgenden Meßpunkten markiert werden.

5. Verfahren nach Anspruch 4, **dadurch gekennzeichnet, daß** das Werkstück auf dem Bildschirm als dreidimensionale Graphik dargestellt wird.

6. Verfahren nach Anspruch 4 oder 5, **dadurch gekennzeichnet, daß** die Änderungen durch die Meßpunkte verbindende Linien oder Flächen markiert werden.

7. Verfahren nach Anspruch 6, **dadurch gekennzeichnet, daß** die Linien oder Flächen in entsprechend den Änderungen der Parameter unterschiedlichen Farben dargestellt werden.

8. Verfahren nach einem der vorangehenden Ansprüche, **dadurch gekennzeichnet, daß** in einem Werkstückbild auf einem Bildschirm die Koordinaten der Meßpunkte dargestellt werden.

9. Verfahren nach Anspruch 8, **dadurch gekennzeichnet, daß** die Koordinaten (X, Y, Z) des Meßorts in einem dreidimensionalen kartesischen Koordinatensystem und daneben die Schwenkwinkel (A, B, C), die die Schwenkstellung des Meßgerätes oder des Applikationsorgans um die Achsen (X, Y, Z) des Koordinatensystems an dem Meßort definieren, dargestellt werden.

10. Verfahren nach einem der vorangehenden Ansprüche, **dadurch gekennzeichnet, daß** Schichtdicke, Farbton und/oder Oberflächenverlauf der Werkstücke gemessen werden, während diese nach der Beschichtung serienweise durch einen Inspektionsbereich gefördert werden.

11. Verfahren nach einem der Ansprüche 4 bis 10, **dadurch gekennzeichnet, daß** auf dem Bildschirm gleichzeitig die bei der Messung gespeicherten aktuellen Meßergebnisse und frühere Meßergebnisse, die zuvor bei einem anderen Werkstück gespeichert worden waren, dargestellt werden.

12. Verfahren nach einem der vorangehenden Ansprüche, **dadurch gekennzeichnet, daß** zur Kontrolle schwierig zu beschichtender Problemzonen der Werkstückoberfläche ein besonderes Meßprogramm vorgesehen ist, nach dem nur die Problemzone mit dem Meßgerät abgetastet wird.

13. Kontrollsystem zur Kontrolle der Beschichtsqualität von serienweise automatisch mit einem Applikationsorgan gemäß Prozessparametern eines gespeicherten Beschichtungsprogramms beschichteten Werkstücken, insbesondere Fahrzeugkarossen,
mit einem programmgesteuerten Roboter oder mehrachsigen Bewegungsautomaten, an dem mindestens ein Meßgerät zur Messung mindestens eines Qualitätsparameters der Schicht an vorbestimmten Meßpunkten über die Oberfläche des Werkstücks bewegbar montiert ist,
und mit einer Datenbank zur Speicherung der Meßwerte, wobei ein Programm vorgesehen ist, das die Lage eines Bildes des Werkstücks in einem Referenzkoordinatensystem definiert,
und ein Rechner vorgesehen ist, der die Meßwerte in der Datenbank mit den Koordinaten der Meßpunkte in dem Referenzkoordinatensystem verknüpft,
und wobei die Meßwerte der einzelnen Meßpunkte in der Datenbank zusammen mit den Koordinaten (X, Y, Z) der Meßpunkte in einem kartesischen Koordinatensystem und mit den jeweiligen Schwenkstellungen (A,B,C) des Meßgeräts um die Achsen (X,Y,Z) des Koordinatensystems gespeichert sind.

## Claims

1. Method of monitoring the coating quality of workpieces, in particular motor vehicle bodies, which are serially coated automatically by an applicator device according to process parameters of a stored coating program, wherein
at least one measuring device for measuring at least one quality parameter of the layer is moved automatically by a robot or automatic moving device over the coated surface of the workpiece coated in the serial coating operation and at predetermined measurement points it measures the parameter, and wherein the measured values are stored in a database;
the co-ordinates of the measurement points are stored in the database together with the values measured at the respective points and are assigned thereto;
**characterised in that**
with the co-ordinates of the measurement points the respective pivoted position (A, B, C) of the measuring device about the axes (X, Y, Z) of the system of co-ordinates is stored in the database.

2. Method as claimed in Claim 1, **characterised in that** the coating thickness is measured.

3. Method as claimed in any one of the preceding claims, **characterised in that** the measured values are compared with desired values for each measurement point and data or signals corresponding to deviations are generated.

4. Method as claimed in any one of the preceding claims, **characterised in that** at least a part of the coated workpiece is displayed on a screen and changes to the measured parameter between successive measurement points are marked in the image of the workpiece.

5. Method as claimed in Claim 4, **characterised in that** the workpiece is displayed on the screen as a three-dimensional graphic.

6. Method as claimed in Claim 4 or Claim 5, **characterised in that** the changes are marked by lines or areas connecting the measurement points.

7. Method as claimed in Claim 6, **characterised in that** the lines or areas are displayed in different colours corresponding to the changes in the parameters.

8. Method as claimed in any one of the preceding claims, **characterised in that** in an image of the workpiece the co-ordinates of the measurement points are displayed on a screen.

9. Method as claimed in Claim 8, **characterised in that** the co-ordinates (X, Y, Z) of the measurement location are displayed in a three-dimensional cartesian system of co-ordinates and in addition the pivot angles (A, B, C) which define the pivoted position of the measuring device or of the applicator device about the axes (X, Y, Z) of the system of co-ordinates at the measurement location are displayed.

10. Method as claimed in any one of the preceding claims, **characterised in that** the coating thickness, colour and/or surface configuration of the workpieces are measured, whilst after the coating the workpieces are conveyed serially through an inspection region.

11. Method as claimed in any one of Claims 4 to 10, **characterised in that** the current measurement results stored simultaneously with the measurement and earlier measurement results which had been stored previously in relation to a different workpiece are displayed on the screen.

12. Method as claimed in any one of the preceding claims, **characterised in that** for monitoring of problem zones of the workpiece surface which are difficult to coat a special measuring program is provided according to which only the problem zone is scanned by the measuring device.

13. Monitoring system for monitoring the coating quality of workpieces, in particular motor vehicle bodies, which are serially coated automatically by an applicator device according to process parameters of a stored coating program,
with a program-controlled robot or multi-axial automatic moving device on which there is movably mounted at least one measuring device for measuring at least one quality parameter of the coating at predetermined measurement points over the surface of the workpiece,
and with a database for storage of the measured values, wherein a program is provided which defines the position of an image of the workpiece in a system of reference co-ordinates,
and a computer is provided which links the measured values in the database with the co-ordinates of the measurement points in the system of reference co-ordinates,
and wherein the measured values of the individual measurement points are stored in the database together with the co-ordinates (X, Y, Z) of the measurement points in a cartesian system of co-ordinates and with the respective pivoted positions (A, B, C) of the measuring device about the axes (X, Y, Z) of the system of co-ordinates.

## Revendications

1. Procédé pour contrôler la qualité de revêtement de pièces à travailler, en particulier de carrosseries de véhicule, automatiquement recouvertes en série par un élément d'application selon des paramètres de processus d'un programme de revêtement mémorisé, dans lequel
au moins un appareil de mesure pour mesurer au moins un paramètre de qualité de la couche est déplacé automatiquement par un robot ou un dispositif automatique de déplacement à travers la surface recouverte de la pièce à travailler recouverte en fonctionnement de revêtement en série et mesure le paramètre en des points de mesure prédéterminés, et dans lequel les valeurs mesurées sont stockées dans une base de données ;
les coordonnées des points de mesure sont déterminées automatiquement dans un système de coordonnées définissant la surface recouverte et se référant au déplacement de l'appareil de mesure ;
les coordonnées des points de mesure dans la base de données sont mémorisés dans la base de données en même temps que les valeurs mesurées aux points respectifs et leur sont attribuées ;
**caractérisé en ce qu'**avec les coordonnées des points de mesure, la position de pivotement respective (A, B, C) de l'appareil de mesure autour des axes (X, Y, Z) du système de coordonnées est mémorisée dans la base de données.

2. Procédé selon la revendication 1, **caractérisé en ce que** l'épaisseur de couche est mesurée.

3. Procédé selon l'une quelconque des revendications précédentes, **caractérisé en ce que** les valeurs de mesure sont comparées avec des valeurs de consigne mémorisées pour chaque point de mesure et des données ou signaux correspondant à des écarts sont générés.

4. Procédé selon l'une quelconque des revendications précédentes, **caractérisé en ce qu'**au moins une partie de la pièce à travailler recouverte est représentée sur un écran, et sur l'image de la pièce à travailler, des modifications du paramètre mesuré entre des points de mesure consécutifs sont marquées.

5. Procédé selon la revendication 4, **caractérisé en ce que** la pièce à travailler est représentée à l'écran comme un graphique tridimensionnel.

6. Procédé selon la revendication 4 ou 5, **caractérisé en ce que** les modifications sont marquées par des lignes ou surfaces reliant les points de mesure.

7. Procédé selon la revendication 6, **caractérisé en ce que** les lignes ou surfaces sont représentées en couleurs différentes selon les modifications des paramètres.

8. Procédé selon l'une quelconque des revendications précédentes, **caractérisé en ce que** sur une image de pièce à travailler à l'écran, les coordonnées des points de mesure sont représentées.

9. Procédé selon la revendication 8, **caractérisé en ce que** les coordonnées (X, Y, Z) de l'emplacement de mesure sont représentées dans un système de coordonnées cartésiennes tridimensionnel, et à côté, les angles de pivotement (A, B, C) qui définissent la position de pivotement de l'appareil de mesure ou de l'élément d'application autour des axes (X, Y, Z) du système de coordonnées à l'emplacement de mesure sont représentés.

10. Procédé selon l'une quelconque des revendications précédentes, **caractérisé en ce que** l'on mesure l'épaisseur de couche, la nuance de couleur et/ou le tracé de surface des pièces à travailler, pendant que celles-ci sont transportées après l'application de revêtement en série à travers une zone d'inspection.

11. Procédé selon l'une quelconque des revendications 4 à 10, **caractérisé en ce qu'**à l'écran sont représentés en même temps les résultats de mesure actuels mémorisés lors de la mesure et des résultats de mesure antérieurs qui avaient été mémorisés avant sur une autre pièce à travailler.

12. Procédé selon l'une quelconque des revendications précédentes, **caractérisé en ce que** pour le contrôle de zones problématiques difficiles à recouvrir de la surface de pièce à travailler, un programme de mesure spécifique est prévu selon lequel seule la zone problématique est analysée par l'appareil de mesure.

13. Système de contrôle pour contrôler la qualité de revêtement de pièces à travailler, en particulier de carrosseries de véhicule, automatiquement recouvertes en série par un élément d'application selon des paramètres de processus d'un programme de revêtement mémorisé,
comprenant un robot ou dispositif automatique de déplacement multiaxial programmable, sur lequel est monté, de façon à pouvoir se déplacer à travers la surface de la pièce à travailler, au moins un appareil de mesure pour mesurer au moins un paramètre de qualité de la couche en des points de mesure prédéterminés,
et comprenant une base de données pour mémoriser les valeurs de mesure, dans lequel un programme est prévu qui définit la position d'une image de la pièce à travailler dans un système de coordonnées de référence,
et un ordinateur est prévu qui associe les valeurs mesurées dans la base de données avec les coordonnées des points de mesure dans le système de coordonnées de référence,
et dans lequel les valeurs mesurées des points de mesure individuels sont mémorisées dans la base de données en même temps que les coordonnées (X, Y, Z) des points de mesure dans un système de coordonnées cartésiennes et les positions de pivotement respectives (A, B, C) de l'appareil de mesure autour des axes (X, Y, Z) du système de coordonnées.
